# EUROPÄISCHE PATENTANMELDUNG

(11) **EP 4 799 801 A2**
(43) Veröffentlichungstag der Anmeldung: **02.09.2026**
(21) Anmeldenummer: 25221166.9
(22) Anmeldetag: 05.12.2025
(51) Int. Cl.: B29D 30/06

(54) **ENTLÜFTUNGSEINHEIT FÜR EINE VULKANISIERFORM EINES FAHRZEUGREIFENS, VULKANISIERFORM UND FAHRZEUGREIFEN**

(30) Priorität: 10.12.2024 DE 102024211762
(71) Anmelder: Continental Reifen Deutschland GmbH, 30175 Hannover (DE)
(72) Erfinder: Gleeson, Ruaidhri, 30175 Hannover (DE)
(74) Vertreter: Continental Corporation

(57) **Zusammenfassung**

Die Erfindung betrifft eine Entlüftungseinheit (3) für eine Vulkanisierform eines Fahrzeugreifens, wobei die Entlüftungseinheit (3) einen Ventileinsatz (7) mit einem Ventilteller (4) aufweist, wobei eine Ventiltelleroberfläche (10) des Ventiltellers (4) dazu vorgesehen ist, während des Einformvorganges des Fahrzeugreifens dem Fahrzeugreifen zugewandt zu sein und mit einer Laufstreifenoberfläche (11) des Fahrzeugreifens in Kontakt bringbar zu sein. Weiter betrifft die Erfindung eine Vulkanisierform und einen Fahrzeugreifen.

Aufgabe ist es, die Interaktion der Laufstreifenoberfläche mit der Fahrbahn, insbesondere die Schnee- und Eisperformance, eines in einer diese Entlüftungseinheiten aufweisenden Vulkanisierform formgebend vulkanisierten Fahrzeugreifens zu verbessern.

Dies wird dadurch erreicht, dass die Ventiltelleroberfläche (10) eine aus der Ventiltelleroberfläche herausragende Lamelle (13) aufweist.

## Beschreibung

Die Erfindung betrifft eine Entlüftungseinheit für eine Vulkanisierform eines Fahrzeugreifens. Die Erfindung betrifft ferner eine Vulkanisierform und einen Fahrzeugreifen.

Es ist bekannt und üblich, dass sich in Vulkanisierformen für Fahrzeug(luft)reifen, insbesondere für Personenkraftwagen, im Durchschnitt mehrere tausend Entlüftungsbohrungen mit in diese eingesetzten Entlüftungseinheiten befinden. Die Entlüftungseinheiten enthalten Ventileinsätze, deren Ventilteller bei eingeformtem Reifenrohling die Entlüftungsbohrungen verschließen und das Entstehen von Gummiaustrieben während der formgebenden Vulkanisation des Fahrzeugreifens zumindest weitgehend verhindern. Während des Einformvorganges des Reifenrohlings in die Vulkanisierform sind die Ventileinsätze geöffnet, die Ventilteller stehen an der Forminnenseite über, sodass die erforderliche Entlüftung während des Einformvorganges des Reifenrohlings stattfinden kann. Zum Zeitpunkt der Anlage des Reifenrohlings an die Formfläche der Vulkanisierform ist die dem Fahrzeugreifen zugewandte Oberfläche des Ventiltellers, also die Ventiltelleroberfläche, mit dem Fahrzeugreifen in Kontakt und der Ventilteller verschließt die Entlüftungseinheit, wodurch die Entlüftungsbohrung verschlossen ist. Eine Entlüftungseinheit der eingangs genannten Art ist beispielsweise aus der EP 0 774 333 B1 bekannt.

Die Oberfläche des Ventiltellers hinterlässt auf der Reifenoberfläche einen gegengleichen Ventiltellerabdruck.

Es ist ebenfalls bekannt, zumindest die Laufstreifenoberfläche der Profilpositive der Laufstreifen von Fahrzeugreifen, insbesondere von Nordic-, Winter- oder AllSeason-Reifen, mit Feineinschnitten zu durchbrechen, um eine verbesserte Interaktion zwischen der Bodenaufstandsfläche des Fahrzeugreifens und der Oberfläche einer insbesondere winterlichen Fahrbahn zu erhalten. Derartige Feineinschnitte der Profilpositive des Laufstreifens, welche in der Regel eine Breite von maximal 1,0 mm aufweisen, sind durch eine entsprechende Gestaltung der Vulkanisierform erhaltbar, insbesondere durch in der Vulkanisierform verankerte und aus der Formfläche der Vulkanisierform hervortretende Feineinschnittbleche oder durch eine entsprechende Ausgestaltung der Formoberfläche selbst.

Nachteilig ist nun, dass die Entlüftungseinheiten, insbesondere die Ventilteller, einen beachtlichen Teil der zur Ausformung der Laufstreifenoberfläche zur Verfügung stehenden Formfläche der Vulkanisierform einnehmen. Diese steht somit nicht für die Ausgestaltung der Laufstreifenoberfläche der Profilpositive, insbesondere für die Ausformung von Feineinschnitten, zur Verfügung.

Entsprechend bilden die Abdrücke der Ventilteller der Entlüftungseinheiten einen nicht zu vernachlässigenden Anteil der Laufstreifenoberfläche des Fahrzeugreifens, welche nicht für die Ausbildung von Feineinschnitten zur Verfügung steht. Wie eingangs erwähnt, können mehrere tausend dieser Entlüftungseinheiten in einer Vulkanisierform eingesetzt werden, wobei die überwiegende Anzahl dieser Entlüftungseinheiten in den Formflächen des Laufstreifens angeordnet ist. Dadurch ist ein beachtlicher Teil der Laufstreifenoberfläche durch die Oberfläche der Ventiltellerabdrücke geformt.

Der Erfindung liegt somit die Aufgabe zu Grunde, eine Entlüftungseinheit der eingangs genannten Art zur Verfügung zu stellen, durch welche die Interaktion der Laufstreifenoberfläche mit der Fahrbahn, insbesondere die Schnee- und Eisperformance, eines in einer diese Entlüftungseinheiten aufweisenden Vulkanisierform formgebend vulkanisierten Fahrzeugreifens verbesserbar ist. Ferner ist es die Aufgabe, eine entsprechende Vulkanisierform und einen entsprechenden Fahrzeugreifen zur Verfügung zu stellen.

Gelöst wird die gestellte Aufgabe in Bezug auf die Entlüftungseinheit durch eine Entlüftungseinheit gemäß Anspruch 1. Es handelt sich um eine Entlüftungseinheit für eine Vulkanisierform eines Fahrzeugreifens, wobei die Entlüftungseinheit einen Ventileinsatz mit einem Ventilteller aufweist, wobei eine Ventiltelleroberfläche des Ventiltellers dazu vorgesehen ist, während des Einformvorganges des Fahrzeugreifens dem Fahrzeugreifen zugewandt zu sein und mit einer Laufstreifenoberfläche des Fahrzeugreifens in Kontakt bringbar zu sein, wobei die Ventiltelleroberfläche eine aus der Ventiltelleroberfläche herausragende Lamelle aufweist.

In Bezug auf die Vulkanisierform wird die Aufgabe durch eine Vulkanisierform gemäß Anspruch 9 gelöst.

In Bezug auf den Fahrzeugreifen wird die Aufgabe durch einen Fahrzeugreifen gemäß Anspruch 12 gelöst. Erfindungsgemäß ist somit ein Fahrzeugreifen zur Verfügung gestellt, welcher auf seiner Laufstreifenoberfläche eines Laufstreifenprofilpositivs einen durch die Ventiltelleroberfläche der Entlüftungseinheit der Vulkanisierform ausgeformten Ventiltellerabdruck mit einem durch die Lamelle der Ventiltelleroberfläche ausgeformten Abdruckeinschnitt aufweist.

Im Zuge der formgebenden Vulkanisation des Fahrzeugreifens mittels der Vulkanisierform aufweisend die Entlüftungseinheit mit der Ventiltelleroberfläche hinterlässt die Ventiltelleroberfläche auf der Reifenoberfläche einen durch die Ventiltelleroberfläche ausgeformten Ventiltellerabdruck. Entsprechend weist der Ventiltellerabdruck, und damit die Laufstreifenoberfläche des Reifens. Dieser weist einen durch die aus der Oberfläche des Ventiltellers herausragenden Lamelle ausgeformten in die Oberfläche des Fahrzeugreifens hineinragenden Abdruckeinschnitt auf. Wie der Fachperson bekannt, kann aufgrund von Schrumpfungsprozessen des Fahrzeugreifens bei der Vulkanisation beim fertigen, d.h. vulkanisierten und ausgeformten, Fahrzeugreifen der an sich gegengleiche Abdruck des Ventiltellers in seinen Dimensionen geringfügig von einem exakten Negativprofil der Ventiltelleroberfläche abweichen.

Somit ist eine Entlüftungseinheit bzw. eine Vulkanisierform zur Verfügung gestellt, die es ermöglicht, auch den Bereich der Ventiltelleroberfläche zur Ausformung von Einschnitten des Reifenprofils zur Verfügung zu stellen. Somit ist diejenige Oberfläche des Laufstreifens, welche beim Neureifen für derartige kantenbildende Strukturen zur Verfügung steht, vergrößert. Für einen Fahrzeugreifen, der mittels einer solchen Entlüftungseinheit bzw. Vulkanisierform formgebend hergestellt ist, ist somit eine vergrößerte Laufstreifenoberfläche für kantenbildende Strukturen und damit eine verbesserte Interaktion zwischen der Laufstreifenoberfläche und der, insbesondere winterlichen, Fahrbahn ermöglicht.

Somit ist eine Entlüftungseinheit zur Verfügung gestellt, durch welche die Schnee- und Eisperformance eines in einer diese Entlüftungseinheiten aufweisenden Vulkanisierform vulkanisierten Fahrzeugreifens verbesserbar ist.

Eine Lamelle ist im Sinne der Erfindung ein Erhebung mit einer Längserstreckung, wobei eine Länge L entlang der Längserstreckung größer ist als eine Höhe H der Lamelle, bevorzugt größer als 2*H, und größer ist als eine Breite B, bevorzugt größer als 2*B, der Lamelle.

Ein Einschnitt ist im Sinne der Erfindung eine Vertiefung mit einer Längserstreckung, wobei eine Länge entlang der Längserstreckung der Vertiefung größer ist als eine Tiefe T des Einschnitts, bevorzugt größer als 2*T, und größer ist als eine Breite des Einschnitts, bevorzugt größer als zweimal der Breite des Einschnitts.

Im Folgenden werden bevorzugte Ausführungsformen der Entlüftungseinheit erläutert.

Eine bevorzugte Ausführungsform ist dadurch gegeben, dass die Entlüftungseinheit mit einer zentralen Mittellängsachse a, einem in eine Entlüftungsbohrung der Vulkanisierform einpressbaren insbesondere zylindrischen Gehäuse und dem Ventileinsatz, welcher in einem Gehäuse positioniert und gegenüber diesem beweglich ist und welcher einen Ventilschaft mit dem Ventilteller und eine den Ventilschaft umgebende Schraubendruckfeder aufweist und wobei die dem Fahrzeugreifen zugewandte Oberfläche des Ventiltellers während des Einformvorganges des Fahrzeugreifens zum Bewegen/Schließen des Ventileinsatzes mit der Oberfläche des Fahrzeugreifens in Kontakt bringbar ist.

Eine derartige Entlüftungseinheit ermöglicht ein zuverlässiges und einfaches Entlüften. Das Eintreten von Gummimaterial in die Entlüftungsbohrung und damit auch Austriebe am Fahrzeugreifen sind weitgehend vermieden. Die Entlüftungseinheit kann aber auch anders ausgebildet sein.

Eine bevorzugte Ausführungsform ist dadurch gegeben, dass die Lamelle eine Höhe H von 0,2 mm bis 2,5 mm, bevorzugt 0,3 mm bis 1,5 mm und/oder eine Breite B von 0,2 mm bis 2,0 mm, bevorzugt von 0,3 mm bis 1,5 mm, aufweist.

Eine solche Lamelle lässt sich auf einer üblichen Ventiltelleroberfläche besonders gut realisieren. Gleichzeitig ist die Breite und/oder die Höhe darauf abgestimmt, dass ein vorteilhafter Kanteneffekt beim durch die Lamelle ausgeformten Abdruckeinschnitt am Fahrzeugreifen erwirkbar ist.

Eine bevorzugte Ausführungsform ist dadurch gegeben, dass sich die Lamelle an einem oder an beiden Längserstreckungsenden der Lamelle, bevorzugt an beiden Längserstreckungsenden der Lamelle, bis zu einem umlaufenden Rand der Ventiltelleroberfläche erstreckt.

Somit ist eine besonders lange Längserstreckung der Lamelle und entsprechend eine besonders lange Kante der Laufstreifenoberfläche ermöglicht.

Entsprechend weist ein von einer solchen Entlüftungseinheit ausgeformter Ventiltellerabdruck einen Abdruckeinschnitt mit Längserstreckungsenden auf, wobei eine oder beide Längserstreckungsenden, bevorzugt beide Längserstreckungsenden, des Einschnitts, einen Rand der Oberfläche des Ventiltellerabdrucks durchbrechen bzw. mit diesem enden, wodurch eine besonders lange Längserstreckung des Abdruckeinschnitts erwirkbar ist.

Eine bevorzugte Ausführungsform ist dadurch gegeben, dass sich die Lamelle lediglich innerhalb der Ventiltelleroberfläche erstreckt und somit vor einem umlaufenden Rand der Ventiltelleroberfläche endet.

Entsprechend erstreckt sich am mittels einer Vulkanisierform aufweisend eine derartige Entlüftungseinheit vulkanisierten Fahrzeugreifen der Abdruckeinschnitt des Ventiltellerabdrucks der Ventiltelleroberfläche lediglich innerhalb der Oberfläche des Ventiltellerabdrucks und endet somit vor einem umlaufenden Rand der Oberfläche des Ventiltellerabdrucks.

Eine bevorzugte Ausführungsform ist dadurch gegeben, dass die Ventiltelleroberfläche eine oder mehrere Lamellen aufweist, welche in Draufsicht jeweils geradlinig ausgebildet ist oder sind.

Ein mittels einer Vulkanisierform aufweisend eine solche Entlüftungseinheit ausgeformter Fahrzeugreifen weist auf seiner Oberfläche einen von der Ventiltelleroberfläche ausgeformten Ventiltellerabdruck auf, welcher in Draufsicht einen oder mehrere geradlinig ausgebildete Abdruckeinschnitte aufweist.

Jeder geradlinig ausgebildete Abdruckeinschnitt erwirkt eine Interaktion in einer vorbestimmten Richtung.

Eine bevorzugte Ausführungsform ist dadurch gegeben, dass die Ventiltelleroberfläche zumindest zwei Lamellen aufweist, wobei die zumindest zwei Lamellen einander kreuzend, bevorzugt als zwei einander rechtwinklig kreuzende Lamellen, angeordnet sind.

Ein mittels einer solchen Entlüftungseinheit vulkanisierter Fahrzeugreifen weist auf seiner Oberfläche einen von der Ventiltelleroberfläche ausgeformten Ventiltellerabdruck mit zumindest zwei sich kreuzenden Abdruckeinschnitten auf.

Die sich kreuzenden Abdruckeinschnitte ermöglichen Kanten in unterschiedlichen Richtungen. Gleichzeitig ist der Einfluss einer Ausrichtung der Ventiltelleroberfläche auf die Reifenperformance reduziert. Eine ggf. unerwünschte Varianz in der Ausrichtung kann beispielsweise beim Einsetzen der Entlüftungseinheit in die Vulkanisierform und/oder während der Reifenvulkanisation erfolgen.

Eine rechtwinklige kreuzende Anordnung zweier Abdruckeinschnitte bzw. Lamellen ermöglicht eine Gleichverteilung der Ausrichtung der Lamellen- bzw. Abdruckkanten.

Eine bevorzugte Ausführungsform ist dadurch gegeben, die Ventiltelleroberfläche zumindest zwei Lamellen aufweist, wobei die zumindest zwei Lamellen winklig aneinanderstoßend angeordnet sind, bevorzugt dass dabei drei ein Dreieck bildende Lamellen oder dass dabei zumindest drei sich von einem gemeinsamen Zentrum aus in unterschiedliche Richtungen erstreckende Lamellen angeordnet sind.

Ein mittels einer solchen Entlüftungseinheit vulkanisierter Fahrzeugreifen weist auf seiner Oberfläche einen von der Ventiltelleroberfläche ausgeformten Ventiltellerabdruck mit zumindest zwei winklig aneinanderstoßenden Abdruckeinschnitten auf.

Die winklig aneinanderstoßenden Abdruckeinschnitte ermöglichen Kanten in unterschiedlichen Richtungen. Gleichzeitig ist der Einfluss einer Ausrichtung der Ventiltelleroberfläche auf die Reifenperformance reduziert. Eine ggf. unerwünschte Varianz in der Ausrichtung kann beispielsweise beim Einsetzen der Entlüftungseinheit in die Vulkanisierform und/oder während der Reifenvulkanisation erfolgen.

Die Erfindung betrifft weiter eine Vulkanisierform für die formgebende Vulkanisation von Fahrzeugreifen, wobei die Vulkanisierform eine erfindungsgemäße Entlüftungseinheit aufweist und wobei eine Formfläche der Vulkanisierform, welche zur Ausformung einer Laufstreifenoberfläche eines Laufstreifenprofilpositivs, wie eines Profilblocks oder einer Profilrippe, des Fahrzeugreifens vorgesehen ist, die Ventiltelleroberfläche der Entlüftungseinheit aufweist.

Die Ventiltelleroberfläche der Entlüftungseinheit ist somit so angeordnet, dass sie dazu vorgesehen ist, während des Einformvorganges des Fahrzeugreifens dem Fahrzeugreifen zugewandt zu sein und mit der Laufstreifenoberfläche des Fahrzeugreifens in Kontakt bringbar zu sein.

Die Entlüftung ist somit weiterhin vorteilhaft gewährleistet. Gleichzeitig weist die Vulkanisierform eine vergrößerte formgebende Oberfläche auf, welche zur Ausbildung von Einschnitten zur Verfügung steht. Somit ermöglicht die Vulkanisierform aufweisend die Entlüftungseinheit einen Fahrzeugreifen auszuformen, welcher eine erhöhte Anzahl an Einschnitten und/oder eine erhöhte kumulierte Kantenlänge aufweist. Hierdurch ist eine verbesserte Interaktion zwischen der Laufstreifenoberfläche und der, insbesondere winterlichen, Fahrbahn ermöglicht.

Im Folgenden werden vorteilhafte Ausführungsformen der Vulkanisierform beschreiben.

Eine vorteilhafte Ausführungsform ist dadurch gegeben, dass die Formfläche außerhalb der Ventiltelleroberfläche zumindest eine Formflächenlamelle zur Ausformung eines Profileinschnitts der auszuformenden Laufstreifenoberfläche aufweist, welche aus der Formfläche herausragt und eine Breite von 0,3 mm bis 2,0 mm aufweist.

Die Formflächenlamelle ist dazu geeignet, einen die Laufstreifenoberfläche des Laufstreifenpositivs durchbrechenden Profileinschnitt auszuformen.

Der auszuformende Profileinschnitt kann eine Profileinschnitttiefe von maximal 100 % einer Profiltiefe des auszuformenden Laufsteifens aufweisen. Bevorzugt kann der Profileinschnitt als Feineinschnitt eine maximale Profileinschnitttiefe von 70% bis 100% der Profiltiefe aufweisen. Es kann sich aber auch, bevorzugt, um einen Mikroeinschnitt mit einer Profileinschnitttiefe von 0,1 mm bis 2,5 mm, bevorzugt 0,2 mm bis 1,5 mm, handeln. Ein solcher Mikroeinschnitt kann eine Profileinschnitttiefe aufweisen, welche in etwa der Tiefe des durch die Lamelle auszuformenden Abdruckeinschnitts entspricht.

Ein mittels einer solchen Vulkanisierform ausgeformter Fahrzeugreifen weist somit in seiner mantelförmigen Laufstreifenoberfläche sowohl Abdruckeinschnitte als auch Profileinschnitte auf. Das Gesamtvolumen an Einschnitten sowie die kumulierte Kantenlänge ist somit erhöht. Auch die Fläche der Ventiltellerabdrücke ist somit auch für Einschnitte nutzbar.

Eine vorteilhafte Ausführungsform ist dadurch gegeben, dass die Formfläche mehrere der Entlüftungseinheiten mit einer gleichen Lamellenanordnung aus einer oder mehreren der Lamelle(n) aufweisen und dass sich die Entlüftungseinheiten dabei in der Ausrichtung dieser Anordnung zur Umfangsrichtung U um maximal 20° voneinander unterscheiden.

In einer zweckmäßigen Ausführungsform der Vulkanisierform sind eine Vielzahl, bevorzugt alle, der Entlüftungseinheiten der Formfläche als erfindungsgemäße Entlüftungseinheiten aufweisend die Ventiltelleroberfläche mit Lamelle ausgebildet.

In einer zweckmäßigen Ausführungsform der Vulkanisierform weisen eine Vielzahl, bevorzugt alle, der Formflächen zur Ausformung der Laufstreifenoberflächen der Laufstreifenprofilpositive einer Vulkanisierform eine oder mehrere erfindungsgemäße Entlüftungseinheit aufweisend eine Ventiltelleroberfläche mit Lamelle auf.

Die Erfindung umfasst auch einen Fahrzeugreifen, welcher mittels der vorbeschriebenen Vulkanisierform formgebend vulkanisierbar bzw. vulkanisiert ist. Der Fahrzeugreifen weist entsprechend auf seiner Laufstreifenoberfläche eines Laufstreifenprofilpositivs einen durch die Ventiltelleroberfläche der Entlüftungseinheit der Vulkanisierform ausgeformten Ventiltellerabdruck mit einem durch die Lamelle der Ventiltelleroberfläche ausgeformten Abdruckeinschnitt auf.

Im Folgenden werden vorteilhafte Ausführungsformen des Fahrzeugreifens näher beschrieben.

Eine vorteilhafte Ausführungsform ist dadurch gegeben, dass die Laufstreifenoberfläche des Profilpositivs außerhalb des Ventiltellerabdrucks von zumindest einem Profileinschnitt, insbesondere einer Breite von 0,3 mm bis 2,0 mm, durchbrochen ist.

Der Profileinschnitt kann durch eine durch Formflächenlamelle der Formoberfläche der Vulkanisierform, wobei die Formflächenlamelle außerhalb der Ventiltelleroberfläche angeordnet ist, ausgeformt sein.

Der Profileinschnitt kann eine Profileinschnitttiefe von maximal 100 % einer Profiltiefe des Laufsteifens aufweisen. Bevorzugt kann der Profileinschnitt als Feineinschnitt eine maximale Profileinschnitttiefe von 70% bis 100% der Profiltiefe aufweisen. Es kann es sich aber auch, bevorzugt, um einen Mikroeinschnitt mit einer Profileinschnitttiefe von 0,2 mm bis 2,5 mm, bevorzugt 0, mm bis 1,5 mm, handeln. Ein solcher Mikroeinschnitt kann eine Profileinschnitttiefe aufweisen, welche in etwa der Tiefe des durch die Lamelle auszuformenden Abdruckeinschnitts entspricht. Das Profilpositiv kann sowohl einen Mikroeinschnitt als auch einen Feineinschnitt aufweisen.

Eine vorteilhafte Ausführungsform ist dadurch gegeben, dass die Laufstreifenoberfläche des Profilpositivs zwei parallel zueinander ausgerichtete Profileinschnitte aufweist, und dass der Ventiltellerabdruck räumlich benachbart und räumlich zwischen den beiden Profileinschnitten angeordnet ist, bevorzugt dass eine Längserstreckungsrichtung des Abdruckeinschnitts des Ventiltellerabdrucks parallel zu den Profileinschnitten ausgerichtet ist.

Die Abdruckeinschnitte können somit die Wirkung der Profileinschnitte besonders gut unterstützen.

Der Ventiltellerabdruck kann in Längserstreckungsrichtung der Profileinschnitte benachbart und zwischen den Profileinschnitten angeordnet sein.

Der Ventiltellerabdruck kann aber auch senkrecht zu Längserstreckungsrichtung der Profileinschnitte benachbart und zwischen den Profileinschnitten angeordnet sein.

Eine vorteilhafte Ausführungsform ist dadurch gegeben, dass die Laufstreifenoberfläche des Profilpositivs mehrere der Ventiltellerabdrücke aufweist, dass die Ventiltellerabdrücke jeweils eine gleiche Anordnung der Abdruckeinschnitte aufweisen und dass sie sich dabei in der Ausrichtung dieser Anordnungen zur Umfangsrichtung U um maximal 20°, bevorzugt 10°. voneinander unterscheiden.

Die Einschnitte können somit zusammen eine besonders gute richtungsabhängige Verbesserung der Interkation zwischen Lauffläche und Fahrbahn erzielen.

In einer vorteilhaften Ausführungsform handelt es sich um eine Vulkanisierform für einen Fahrzeugluftreifen bzw. um einen Fahrzeugluftreifen. Bevorzugt handelt es sich bei dem Fahrzeugluftreifen um einen Fahrzeugluftreifen für einen Personenkraftwagen, einen Van, einen Light-Truck oder ein Zweirad. Es handelt sich bevorzugt um Nordic-, Winter- oder AllSeason-Reifen.

Weitere Merkmale, Vorteile und Einzelheiten der Erfindung werden nun anhand der Zeichnung näher beschrieben. Dabei zeigen die
Fig. 1 eine schematisch Schnittdarstellung eines Teilbereiches eines Formsegmentes einer Vulkanisierform;
Fig. 2 eine schematisch Schnittdarstellung eines Teilbereiches eines Formsegmentes einer Vulkanisierform;
Fig. 3 einen Längsschnitt einer Ausführungsvariante einer erfindungsgemäß ausgeführten Entlüftungseinheit;
Fig. 4 bis 7 eine Draufsicht auf einen erfindungsgemäßen Ventiltellerabdruck bzw. eine erfindungsgemäße Ventiltelleroberfläche;
Fig. 8 eine Draufsicht auf eine erfindungsgemäße Formoberfläche bzw. eine Laufstreifenoberfläche eines erfindungsgemäßen Fahrzeugreifens.

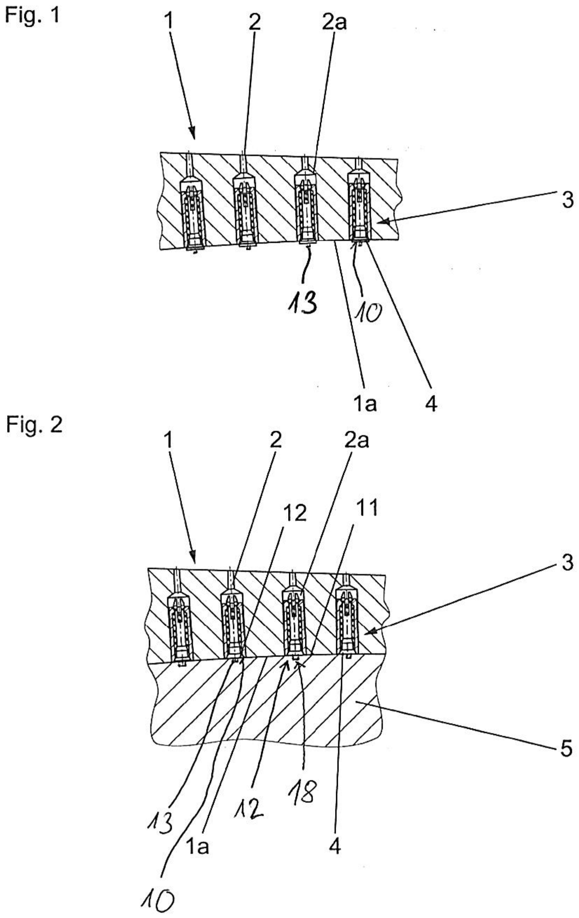

Die Fig. 1 und 2 zeigen Schnittdarstellungen eines Teiles eines Formsegmentes 1 einer Vulkanisierform zur formgebenden Vulkanisation eines Fahrzeugreifens, die, wie es üblich ist, durch den Laufstreifenbereich formenden Teil radial in eine Anzahl von Formsegmenten geteilt ist, wobei insbesondere zwischen sieben und dreizehn Formsegmente vorgesehen sind. Die Schnitte durch das Formsegment 1 zeigen ferner eine Anzahl von Längsschnitten durch Entlüftungsbohrungen 2, welche in radialer Richtung orientiert sind und bei der gezeigten Ausführung an der Formfläche 1a der Vulkanisierform, welche hier durch die Formsegmentinnenseite gebildet ist, jeweils einen Abschnitt 2a mit einem größeren Durchmesser aufweisen. In jedem Abschnitt 2a ist eine Entlüftungseinheit 3 eingesetzt. Die Entlüftungseinheiten 3 sind in der in Fig. 1 gezeigten Darstellung - ohne eingeformten Reifenrohling - sämtlich geöffnet, wobei Feder beaufschlagte Ventilteller 4 etwas über die Formfläche 1a überstehen und in die Vulkanisierformkaverne ragen. Fig. 2 zeigt in analoger Darstellungsweise zu Fig. 1 den Moment, wo gegen Ende des Einformens eines Reifenrohlings sein den Laufstreifen 5 abformender Teil mit der Formfläche 1a in Kontakt gekommen ist, sodass der rohe Laufstreifen 5 die Ventilteller 4 über die Oberfläche des Ventiltellers 10 in die in Fig. 2 gezeigte geschlossene Stellung gedrückt haben.

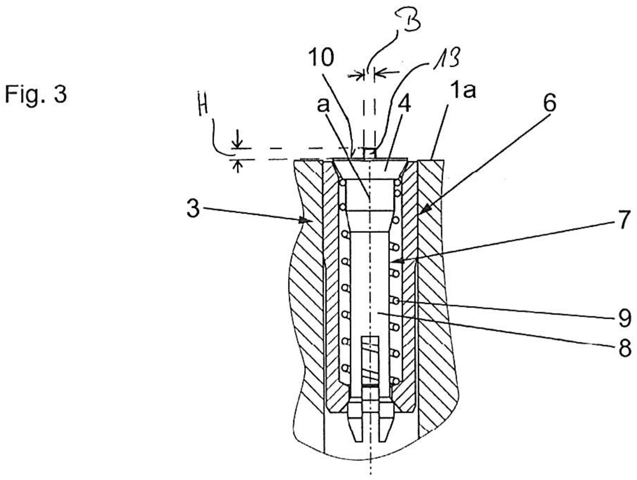

Fig. 3 zeigt in der gleichen Schnittebene wie die Figuren 1 und 2 in vergrößerter Darstellung eine einzelne Entlüftungseinheit 3, welche ein Gehäuse 6, einen Ventileinsatz 7 aus einem Ventilschaft 8 und dem bereits erwähnten Ventilteller 4 sowie eine Schraubendruckfeder 9, welche den Ventilschaft 8 umgibt und mit ihrem einen Ende am Gehäuse 6 und mit ihrem anderen Ende an der Unterseite des Ventiltellers 4 abgestützt ist. Die Entlüftungseinheit 3 weist eine in ihrer Längserstreckung - diese entspricht in Formsegmenten 1, die den Laufstreifen 5 ausformen der radialen Richtung im Fahrzeugreifen - verlaufende Mittellängsachse a auf, bezüglich welcher die meisten Bestandteile der Entlüftungseinheit 3 rotationssymmetrisch ausgeführt sind. Die Mittellängsachse a der Entlüftungseinheit 3 ist daher gleichzeitig die Mittellängsachse a des Gehäuses 6 und des Ventileinsatzes 7. Die Ventiltelleroberfläche 10 weist erfindungsgemäß eine aus der Ventiltelleroberfläche herausragende Lamelle 13 auf. Die Lamelle 13 weist eine Längserstreckung auf und kann eine Höhe H von 0,2 mm bis 2,5 mm, bevorzugt 0,3 mm bis 1,5 mm und/oder eine Breite B von 0,2 mm bis 2,0 mm, bevorzugt von 0,3 mm bis 1,5 mm, aufweisen. Es kann sich dabei um eine Entlüftungseinheit 3 aus den Figuren 1 und/oder 2 handeln.

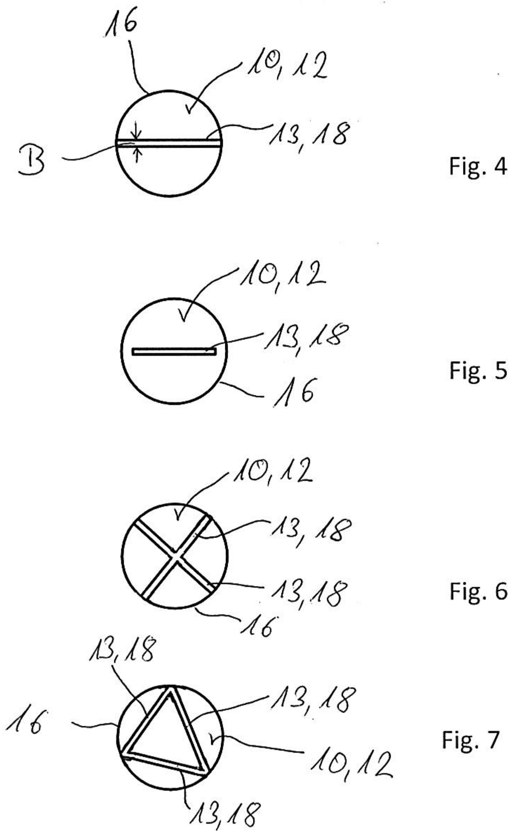

Die Figuren 4 bis 7 zeigen Beispiele für die Draufsicht auf eine Ventiltelleroberfläche 10 aufweisend die herausragende Lamelle 13 einer erfindungsgemäßen Entlüftungseinheit bzw. einen Ventiltellerabdruck 12 eines erfindungsgemäßen Fahrzeugreifens mit einem Abdruckeinschnitt 18. Ein Laufstreifen 5 ausgeformt mittels einer Vulkanisierform aufweisend die Entlüftungseinheit mit der entsprechenden Ventiltelleroberfläche 10 weist den davon ausgeformten Ventiltellerabdruck 12 mit dem von der Lamelle 13 ausgeformten Abdruckeinschnitt 18 auf.

Die Lamelle 13 kann eine Höhe H von 0,2 mm bis 2,5 mm, bevorzugt 0,3 mm bis 1,5 mm und/oder eine Breite B von 0,2 mm bis 2,0 mm, bevorzugt von 0,3 mm bis 1,5 mm, aufweisen.

Die Figur 4 und 5 zeigt jeweils eine Ventiltelleroberfläche 10 bzw. einen Ventiltellerabdruck 12, mit jeweils genau einer geradlinigen Lamelle 13 bzw. genau einem Abdruckeinschnitt 18.

Die Figur 6 zeigt eine Ventiltelleroberfläche 10 bzw. einen Ventiltellerabdruck 12, mit jeweils genau zwei geradlinigen Lamellen 13 bzw. Abdruckeinschnitten 18, welche in einem Winkel, insbesondere einem rechten Winkel, kreuzend angeordnet sind.

Die Figur 7 zeigt eine Ventiltelleroberfläche 10 bzw. einen Ventiltellerabdruck 12, mit jeweils genau drei geradlinigen Lamellen 13 bzw. Abdruckeinschnitten 18, welche winklig aneinanderstoßend angeordnet sind, insbesondere dabei ein Dreieck bildend.

In den Figuren 4, 6 und 7 erstrecken sich die Lamellen 13 bzw. Abdruckeinschnitte 18 bis zu einem die Abdruckoberfläche 4 umlaufenden Rand 16, wohingegen in der Figur 5 die Erhebung bzw. Vertiefung an beiden Längserstreckungsenden vor dem Rand 16 endet.

Weitere geometrische Ausführungsformen sind möglich. Weitere Anordnungen der Lamelle(n) bzw. Abdruckeinschnitt(e) sind möglich.

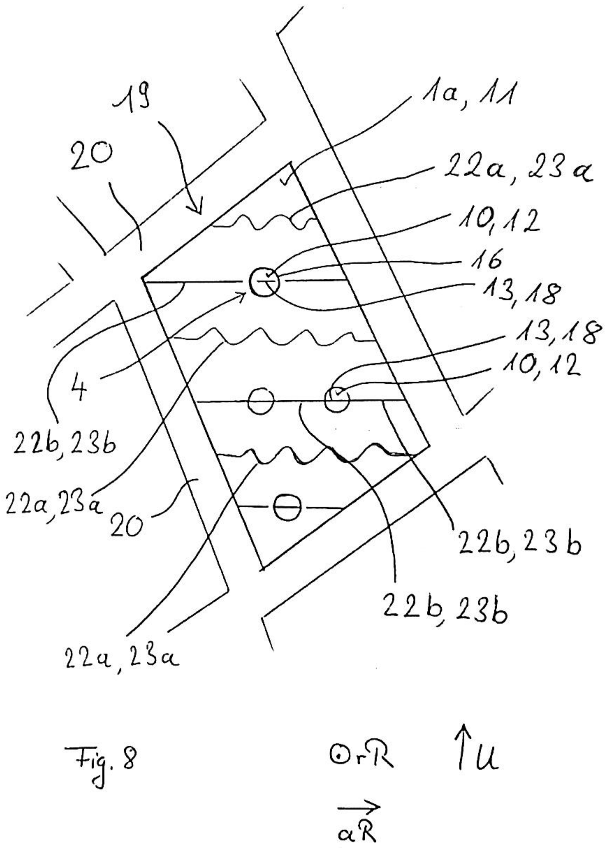

Die Figur 8 zeigt eine schematische Draufsicht auf einen Ausschnitt auf eine Forminnenseite einer Vulkanisierform zur Ausformung eines Laufstreifen 5 eines Fahrzeugreifens bzw. eine schematische Draufsicht auf einen mit einer solchen Vulkanisierform ausgeformten Laufstreifen 5 eines Fahrzeugreifens. Die Profilierung des Laufstreifens 5 mit einzelnen Profilpositiven 19, hier Profilblöcken, welche durch Profilrillen 20 insbesondere einer Breite von mindestens 4,0 mm voneinander getrennt sind, ist deutlich erkennbar. Es handelt sich um ein Winterreifenprofil oder ein Alljahresprofil eines Fahrzeugluftreifens.

Die Vulkanisierform weist eine Formfläche 1a auf, welche zur Ausformung der Laufstreifenoberfläche 11 des Profilpositivs 19 vorgesehen ist. Die Formfläche 1a weist wenigstens eine erfindungsgemäße Entlüftungseinheit 3 auf, deren Ventiltelleroberfläche 10 mit zumindest einer Lamelle 13 ausgebildet ist. Die Formfläche 1a weist außerhalb der Entlüftungseinheit 3 zumindest eine Formflächenlamelle 23a,23b zur Ausformung eines Profileinschnitt 22a,22b auf, welche aus der Formfläche 1a herausragt und eine Breite von 0,3 mm bis 2,0 mm aufweist. Konkret weist die Formfläche Formflächenlamellen 23a zur Ausformung von in der Draufsicht insbesondere wellenförmig ausgebildeten Feineinschnitten einer maximalen Tiefe von 70% bis 100% der Profiltiefe auf sowie Formflächenlamellen 23b zur Ausformung von in der Draufsicht insbesondere gerade ausgebildeten Mikroeinschnitten einer Tiefe von 0,2 mm bis 2,5 mm, bevorzugt 0, mm bis 1,5 mm. Die Formfläche 1a weist mehrere der Entlüftungseinheiten 3 mit einer gleichen Anordnung ihrer Lamelle 13 auf, wobei sich die Entlüftungseinheiten 3 dabei in der Ausrichtung dieser Anordnung zur Umfangsrichtung U um maximal 20° voneinander unterscheiden.

Der mittels dieser Vulkanisierform ausgeformte Laufstreifen 3 ist entsprechend ausgebildet.

Die Laufstreifenoberfläche 11 des Profilpositivs 19 weist entsprechend einen Ventiltellerabdruck 12 mit einem Abdruckeinschnitt 18 auf. Die Laufstreifenoberfläche 11 weist außerhalb des Ventiltellerabdrucks 12 zumindest einen Profileinschnitt 22a,22b auf, welcher das Profilpositiv 19 durchbricht und eine Breite von 0,3 mm bis 2,0 mm aufweisen kann. Entsprechend der Formfläche weist die Laufstreifenoberfläche 11 in der Draufsicht wellenförmige Feineinschnitte 22a einer maximalen Tiefe von 70% bis 100% der Profiltiefe auf sowie Mikroeinschnitte 22b einer Tiefe von 0,2 mm bis 2,5 mm, bevorzugt 0, mm bis 1,5 mm auf. Die Laufstreifenoberfläche 11 weist mehrere Ventiltellerabdrücke 12 mit einer gleichen Anordnung ihrer Abdruckeinschnitte 18 auf, welche sich in der Ausrichtung dieser Anordnungen zur Umfangsrichtung U um maximal 20° voneinander unterscheiden.

Die Profileinschnitte 22a,22b sowie eine Längserstreckungsrichtung der Abdruckeinschnitte 18 der Ventiltellerabdrücke 12 sind parallel zueinander ausgerichtet. Die Laufstreifenoberfläche 11 weist Ventiltellerabdrücke 12 auf, die in Längserstreckungsrichtung der Mikroeinschnitte 22b benachbart und zwischen den Mikroeinschnitten 22b angeordnet sind. Die Laufstreifenoberfläche 11 weist Ventiltellerabdrücke 12 auf, die senkrecht zur Längserstreckungsrichtung der Feineinschnitte 22a benachbart und zwischen den Feineinschnitten 22a angeordnet sind.

### Bezugsziffernliste

- 1: Formsegment
- 1a: Formoberfläche
- 2: Entlüftungsbohrung
- 2a: Abschnitt
- 3: Entlüftungseinheit
- 4: Ventilteller
- 5: Laufstreifen
- 6: Gehäuse
- 7: Ventileinsatz
- 8: Ventilschaft
- 9: .Schaubendruckfeder
- 10: Ventiltelleroberfläche
- 11: Laufstreifenoberfläche
- 12: Ventiltellerabdruck
- 13: Lamelle
- 16: RanddesVentiltellers
- 18: Abdruckeinschnitt
- 19: Profilpositiv
- 20: Profilrille
- 22a,22b: Profileinschnitt
- 23a,23b: Formflächenlamellen
- H: Höhe
- B: Breite
- U: Umfangsrichtung
- rR: radiale Richtung
- aR: axiale Richtung

## Patentansprüche

1. Entlüftungseinheit (3) für eine Vulkanisierform eines Fahrzeugreifens, wobei die Entlüftungseinheit (3) einen Ventileinsatz (7) mit einem Ventilteller (4) aufweist, wobei eine Ventiltelleroberfläche (10) des Ventiltellers (4) dazu vorgesehen ist, während des Einformvorganges des Fahrzeugreifens dem Fahrzeugreifen zugewandt zu sein und mit einer Laufstreifenoberfläche (11) des Fahrzeugreifens in Kontakt bringbar zu sein,
**dadurch gekennzeichnet, dass**
die Ventiltelleroberfläche (10) eine aus der Ventiltelleroberfläche herausragende Lamelle (13) aufweist.

2. Entlüftungseinheit (3) nach einem oder mehreren der vorhergehenden Ansprüche, **dadurch gekennzeichnet, dass** die Entlüftungseinheit (3) mit einer zentralen Mittellängsachse (a), einem in eine Entlüftungsbohrung (2) der Vulkanisierform einpressbaren insbesondere zylindrischen Gehäuse (6) und dem Ventileinsatz (7), welcher in einem Gehäuse (6) positioniert und gegenüber diesem beweglich ist und welcher einen Ventilschaft (8) mit dem Ventilteller (4) und eine den Ventilschaft (8) umgebende Schraubendruckfeder (9) aufweist und wobei die dem Fahrzeugreifen zugewandte Oberfläche des Ventiltellers (10) während des Einformvorganges des Fahrzeugreifens zum Bewegen/Schließen des Ventileinsatzes (7) mit der Oberfläche des Fahrzeugreifens in Kontakt bringbar ist.

3. Entlüftungseinheit (3) nach einem oder mehreren der vorhergehenden Ansprüche, **dadurch gekennzeichnet, dass** die Lamelle (13) eine Höhe H von 0,2 mm bis 2,5 mm, bevorzugt 0,3 mm bis 1,5 mm und/oder eine Breite B von 0,2 mm bis 2,0 mm, bevorzugt von 0,3 mm bis 1,5 mm, aufweist.

4. Entlüftungseinheit (3) nach einem oder mehreren der vorhergehenden Ansprüche, **dadurch gekennzeichnet, dass** sich die Lamelle (13) an einem oder an beiden Längserstreckungsenden der Lamelle, bevorzugt an beiden Längserstreckungsenden der Lamelle, bis zu einem umlaufenden Rand (16) der Ventiltelleroberfläche (10) erstreckt.

5. Entlüftungseinheit (3) nach einem oder mehreren der vorhergehenden Ansprüche, **dadurch gekennzeichnet, dass** sich die Lamelle (13) lediglich innerhalb der Ventiltelleroberfläche (10) erstreckt und somit vor einem umlaufenden Rand (16) der Ventiltelleroberfläche (10) endet.

6. Entlüftungseinheit (3) nach zumindest einem der vorangehenden Ansprüche, **dadurch gekennzeichnet, dass** die Ventiltelleroberfläche (10) eine oder mehrere Lamellen (13) aufweist, welche in Draufsicht jeweils geradlinig ausgebildet ist oder sind.

7. Entlüftungseinheit (3) nach zumindest einem der vorangehenden Ansprüche, **dadurch gekennzeichnet, dass** die Ventiltelleroberfläche (10) zumindest zwei Lamellen (13) aufweist, wobei die zumindest zwei Lamellen (13) einander kreuzend, bevorzugt als zwei einander rechtwinklig kreuzende Lamellen (13), angeordnet sind.

8. Entlüftungseinheit (3) nach zumindest einem der vorangehenden Ansprüche, **dadurch gekennzeichnet, dass** die Ventiltelleroberfläche (10) zumindest zwei Lamellen (13) aufweist, wobei die zumindest zwei Lamellen (13) winklig aneinanderstoßend angeordnet sind, bevorzugt dass dabei drei ein Dreieck bildende Lamellen (13) oder dass dabei zumindest drei sich von einem gemeinsamen Zentrum aus in unterschiedliche Richtungen erstreckende Lamellen (13) angeordnet sind.

9. Vulkanisierform für die formgebende Vulkanisation von Fahrzeugreifen, **dadurch gekennzeichnet, dass** die Vulkanisierform eine Entlüftungseinheit (3) gemäß einem oder mehreren der vorangehenden Ansprüche aufweist, dass eine Formfläche (1a) der Vulkanisierform, welche zur Ausformung einer Laufstreifenoberfläche (11) eines Laufstreifenprofilpositivs, wie eines Profilblocks oder einer Profilrippe, des Fahrzeugreifens vorgesehen ist, die Ventiltelleroberfläche (10) der Entlüftungseinheit (3) aufweist.

10. Vulkanisierform nach dem vorhergehenden Anspruch, **dadurch gekennzeichnet, dass** die Formfläche (1a) außerhalb der Ventiltelleroberfläche (10) zumindest eine Formflächenlamelle (23a,23b) zur Ausformung eines Profileinschnitts (22a,22b) der auszuformenden Laufstreifenoberfläche (11) aufweist, wobei die Formflächenlamelle (23a,23b) aus der Formfläche (1a) herausragt und eine Breite von 0,3 mm bis 2,0 mm aufweist.

11. Vulkanisierform nach Anspruch 9 oder 10, **dadurch gekennzeichnet, dass** die Formfläche (1a) mehrere der Entlüftungseinheiten (3) mit einer gleichen Lamellenanordnung aufweist und dass sich die Entlüftungseinheiten (3) dabei in der Ausrichtung dieser Lamellenanordnung zur Umfangsrichtung U um maximal 20° voneinander unterscheiden.

12. Fahrzeugreifen, **dadurch gekennzeichnet, dass** dieser mit einer Vulkanisierform gemäß einem der Ansprüche 9 bis 11 formgebend vulkanisiert ist und entsprechend auf seiner Laufstreifenoberfläche (11) eines Laufstreifenprofilpositivs einen durch die Ventiltelleroberfläche (10) der Entlüftungseinheit (3) der Vulkanisierform ausgeformten Ventiltellerabdruck (12) mit einem durch die Lamelle (13) der Ventiltelleroberfläche (10) ausgeformten Abdruckeinschnitt (18) aufweist.

13. Fahrzeugreifen nach dem vorhergehenden Anspruch, **dadurch gekennzeichnet, dass** die Laufstreifenoberfläche (11) des Profilpositivs außerhalb des Ventiltellerabdrucks (12) von zumindest einem Profileinschnitt (22a,22b), insbesondere einer Breite von 0,3 mm bis 2,0 mm, durchbrochen ist.

14. Fahrzeugreifen nach dem vorhergehenden Anspruch, **dadurch gekennzeichnet, dass** die Laufstreifenoberfläche (11) des Profilpositivs (19) zwei in ihrer Längserstreckungsrichtung parallel zueinander ausgerichtete Profileinschnitte (22a,22b) aufweist, und dass der Ventiltellerabdruck (12) räumlich benachbart und räumlich zwischen den beiden Profileinschnitten (22a,22b) angeordnet ist, bevorzugt dass eine Längserstreckungsrichtung des Abdruckeinschnitts (18) des Ventiltellerabdrucks (12) parallel zu den zwei Profileinschnitten (22a,22b) ausgerichtet ist.

15. Fahrzeugreifen nach zumindest einem der vorhergehenden Anspruch, **dadurch gekennzeichnet, dass** die Laufstreifenoberfläche (11) des Profilpositivs (19) mehrere der Ventiltellerabdrücke (12) aufweist, dass die Ventiltellerabdrücke (12) jeweils eine gleiche Anordnung der Abdruckeinschnitte (18) aufweisen und dass sie sich dabei in der Ausrichtung dieser Anordnungen zur Umfangsrichtung U um maximal 20°, bevorzugt 10°. voneinander unterscheiden.
